# FASCICULE DE BREVET EUROPEEN

(11) **EP 0 838 965 B1**
(45) Date de publication et mention de la délivrance du brevet: **04.09.2002**
(21) Numéro de dépôt: 97402489.5
(22) Date de dépôt: 21.10.1997
(51) Int. Cl.: H04Q 7/36

(54) **Système cellulaire de transmission radioélectrique d'information entre une infrastructure et des mobiles**
Zellulares Funkübertragungssystem für Informationen zwischen einer Infrastruktur und mobilen Stationen
Cellular radio transmission system for information between an infrastructure and mobiles

(30) Priorité: 24.10.1996 FR 9612987
(43) Date de publication de la demande: 29.04.1998
(73) Titulaire: SIEMENS TRANSPORTATION SYSTEMS, 92542 Montrouge (FR)
(72) Inventeur: Lardennois, Régis, 75012 Paris (FR)
(74) Mandataire: Fort, Jacques

(56) Documents cités:
- EP-A- 0 566 551
- EP-A- 0 578 076
- EP-A- 0 726 689
- REINERS C ET AL: "MULTICARRIER TRANSMISSION TECHNIQUE IN CELLULAR MOBILE COMMUNICATIONS SYSTEMS" 8 juin 1994 , PROCEEDINGS OF THE VEHICULAR TECHNOLOGY CONFERENCE, STOCKHOLM, JUNE 8 - 10, 1994, VOL. 3, PAGE(S) 1645 - 1649 , INSTITUTE OF ELECTRICAL AND ELECTRONICS ENGINEERS XP000497701 * abrégé * * see Introduction,page 1645 *

## Description

La présente invention concerne les systèmes cellulaires de transmission radioélectrique d'information entre une infrastructure et des mobiles assujettis à se déplacer suivant un trajet déterminé, l'infrastructure ayant des stations fixes d'émission-réception réparties le long du trajet.

L'invention trouve une application particulièrement importante dans le domaine ferroviaire, et en particulier dans les réseaux ferroviaires qui sont au moins en partie en tunnel, où les réflexions multiples sont particulièrement à craindre. Elle est toutefois également utilisable dans d'autres domaines, et notamment pour les liaisons avec les avions.

Dans les applications ferroviaires, on a déjà proposé de remplacer les liaisons par courants porteurs à basse fréquence dans les rails ou dans des câbles par des transmissions par radio. On a en particulier proposé d'utiliser le standard GSM pour assurer cette transmission. Les liaisons radio ont l'avantage de ne pas exiger de câbles spéciaux, ou des dispositions particulières pour utiliser les rails déjà utilisés pour le courant de traction et certaines installations de signalisation. En contrepartie, les liaisons radio se heurtent à la nécessité de disposer de fréquences affectées, aux conditions défavorables de propagation dans les tunnels qui favorisent les réflexions multiples, et aux perturbations possibles par des interférences radioélectriques.

Les systèmes classiques suivant le standard GSM, à accès multiple par répartition temporelle (dits AMRT ou TDMA), utilisant des stations de base placées généralement en milieu de cellule, ne permettent pas d'écarter tous ces problèmes, même lorsqu'ils mettent en oeuvre des sauts de fréquence lents (*Slow Frequency Hopping*), sauf à utiliser des câbles rayonnants coûteux.

Le document EP-A-0 578 076 décrit un système cellulaire de transmission radioélectrique entre une infrastructure et des mobiles, comprenant une chaîne de stations qui, en fonctionnement, présentent des lobes d'émission tous orientés dons le même sens par rapport à la voie de circulation du mobile, ces lobes présentant un recouvrement.

L'invention vise notamment à fournir un système cellulaire de transmission par radio répondant mieux que ceux antérieurement connus aux exigences de la pratique, notamment en ce qu'il assure un ordre de diversité (nombre de signaux reçus ayant un comportement statistiquement indépendant) accru et en ce qu'il garantit un transfert ou "Hand Over" en champ fort d'une cellule à une autre.

Dans ce but, l'invention propose notamment un système dont l'infrastructure comporte des stations fixes d'émission et de réception réparties le long du trajet et ayant chacune deux émetteurs-récepteurs affectés à deux cellules adjacentes, les émetteurs de deux stations fixes successives affectées à la même cellule étant synchronisés et émettant avec un codage permettant de tolérer ou d'utiliser les trajets multiples.

Parmi les codages permettant de tolérer les trajets multiples, on peut notamment citer ceux dits à multiplexage par répartition de fréquence et codage orthogonal (OC FDM), utilisés pour la diffusion directe numérique vers les mobiles (DAB ou DVB). Parmi les codages mettant à profit les trajets multiples, on peut notamment citer le codage à étalement de spectre par séquence directe, tel que celui décrit dans le document "An overview of the application of code division multiple access (CDMA) to digital cellular systems and personal cellular networks", Qualcomm, 21 mai 1992, document EX60-10010. Par la suite, il sera essentiellement fait référence au codage à accès multiple à répartition de code, qui provoque un élargissement de spectre par un facteur fixé par la longueur du code.

Lorsque le mobile a une longueur importante, il est avantageux de le munir d'un émetteur-récepteur à l'avant et d'un autre à l'arrière ; dans ce cas, on arrive à une diversité d'ordre quatre, et non plus de deux, comme dans le cas d'un émetteur-récepteur unique du mobile qui reçoit les émissions en provenance des deux stations fixes placées aux extrémités de la cellule.

Dans le cas d'une liaison ferroviaire, chaque cellule peut être constituée par l'espace compris entre deux stations successives d'accès de passagers et chaque station d'accès comportera alors deux émetteurs-récepteurs affectés chacun à une cellule. Un ou plusieurs émetteurs-récepteurs intermédiaires affectés à une même cellule peuvent être disposés à l'intérieur de la cellule et synchronisés avec les émetteurs des stations d'accès.

Le passage d'une cellule à une autre s'effectue au niveau d'une station de base placée en extrémité de cellule. Etant donné que le mobile est alors à proximité immédiate de l'émetteur-récepteur, le lobe arrière d'antenne directrice de ce dernier fournit un champ suffisant pour obtenir une liaison robuste et tolérer une panne éventuelle d'un émetteur-récepteur.

Dans le cas de mobiles longs, ayant un émetteur-récepteur à chaque extrémité, ces deux émetteurs-récepteurs peuvent changer de cellule séparément et successivement lors du déplacement du mobile.

Les antennes des émetteurs-récepteurs des stations sont prévues pour rayonner essentiellement vers l'intérieur de la cellule respective, pour minimiser les perturbations dans les cellules voisines et optimiser la couverture de la cellule. Toutefois, il sera inutile de rechercher un lobe très étroit, surtout lorsque le codage utilisé met à profit les trajets multiples, ce qui est le cas notamment du codage dit CDMA ou AMRC.

Les caractéristiques ci-dessus ainsi que d'autres apparaîtront mieux à la lecture de la description qui suit de modes particuliers de réalisation de l'invention, donnés à titre d'exemple non limitatif. La description se réfère aux dessins qui l'accompagnent, dans lesquels :
- la figure 1 est un schéma de principe montrant la répartition spatiale des composants de deux stations fixes et de mobiles placés dans une cellule limitée par deux stations fixes ;
- la figure 2 montre des opérations de transfert de cellule.

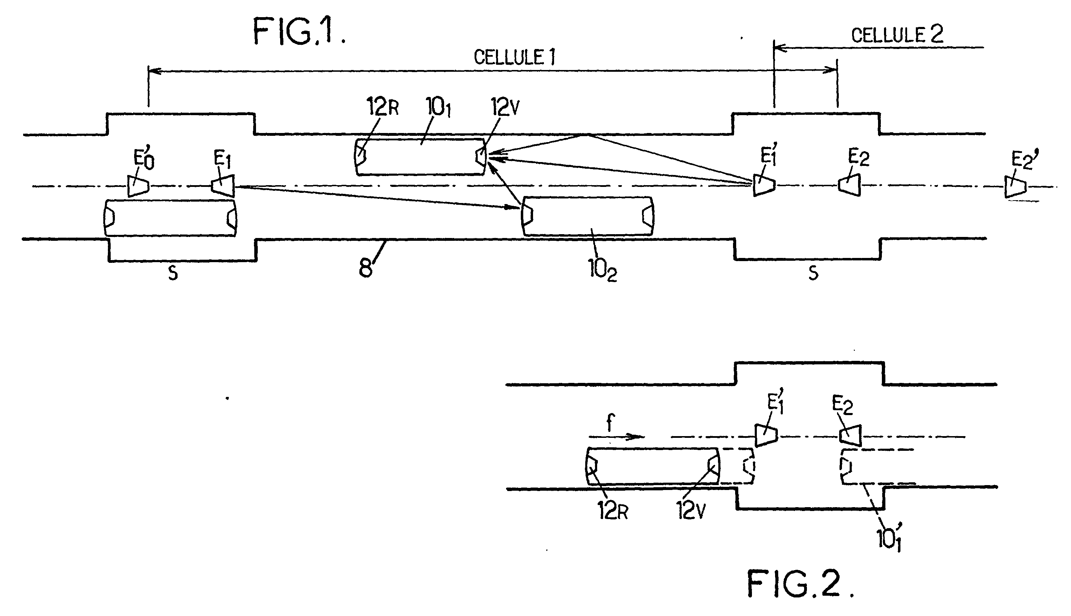

Le schéma de la figure 1 montre un tunnel 8, le long duquel sont réparties des stations de base au sol S qui peuvent être situées aux stations de montée/descente de passagers. L'intervalle compris entre deux stations de base successives constitue une cellule. Chaque station de base est munie de deux émetteurs-récepteurs munis d'antennes qui, pour une même station de base, émettent dans des directions opposées. Ainsi, les antennes des émetteurs E₁ et E'₁, appartenant à deux stations de base successives, émettent l'une vers l'autre, c'est-à-dire vers l'intérieur de la cellule 1. Les antennes des émetteurs-récepteurs E₂ et E'₂ de la cellule suivante émettent de même l'une vers l'autre. Les émetteurs-récepteurs affectés à une même cellule (ou même tous les émetteurs) sont synchronisés au niveau des symboles. Les deux émetteurs-récepteurs d'une même cellule émettent à la même fréquence de porteuse et constituent un canal commun.

Pour permettre un fonctionnement satisfaisant du système, il est préférable que la distance entre les antennes affectées à une même cellule corresponde à une durée de propagation ne dépassant pas 1/10 environ de la durée de symbole.

Dans le mode de réalisation illustré, chaque mobile, 10₁ par exemple, comporte un émetteur-récepteur avant 12V et un émetteur-récepteur arrière 12R. Les termes "avant" et "arrière" désignent l'emplacement des antennes et leur orientation, les parties électroniques pouvant, elles, être regroupées. On voit que chacun des émetteurs, 12V par exemple, reçoit les signaux provenant des deux émetteurs E₁ et E₂, directement et/ou par des trajets multiples dûs aux réflexions sans que l'on puisse à l'avance déterminer pour quel trajet le niveau d'énergie reçu sera le plus important. L'émetteur-récepteur 12V est prévu pour faire la somme des énergies reçues des émetteurs E₁ et E'₁. Du fait du codage utilisé, conduisant à une modulation à bande large, il y a sommation des énergies au niveau de la démodulation. Au contraire, les émetteurs E₁ et E'₁ se brouilleraient mutuellement si on utilisait une modulation à bande étroite.

L'émetteur-récepteur arrière 12R reçoit lui aussi les messages à partir des émetteurs E₁ et E'₁ et somme les énergies. On réalise en conséquence une double diversité d'ordre deux.

Cette diversité des trajets s'ajoute à la protection apportée par l'étalement de spectre et elle est obtenue sans mise en oeuvre d'un protocole complexe.

Le transfert de communication d'une cellule à une autre lorsque le train traverse une station S s'effectue également de façon simple. La figure 2 montre le cas d'un train qui passe de la cellule 1 à la cellule 2, en se déplaçant dans le sens de la flèche f. Lorsque l'antenne avant 12V du train 12₁ arrive en regard de l'antenne E'₁ d'entrée de station, l'émetteur-récepteur correspondant du train doit passer du canal de la cellule 1 à celui de la cellule 2. Ce transfert peut être commandé de plusieurs façons.

Une solution particulière consiste à provoquer le changement de cellule lorsque le champ électromagnétique reçu par l'antenne 12V chute brutalement, à partir de la valeur maximale qu'il avait précédemment. Le lobe arrière de l'antenne E₂ est alors suffisamment important pour que le transfert s'effectue en champ fort, donc de façon robuste aux perturbations.

Le train traverse ensuite la station. L'émetteur-récepteur associé à l'antenne arrière 12R est commuté du canal de la cellule 1 au canal de la cellule 2 lorsque cette antenne arrière arrive en regard de l'antenne E₂ de sortie de station.

On voit que le changement de canal ou changement de cellule qui constitue le point faible de tout système cellulaire est placé dans une zone à champ radioélectrique élevé, ce qui le rend robuste. Du fait qu'il existe une double liaison permanente avec les deux extrémités du train, une panne intervenant dans l'infrastructure ou à bord n'apporte pas de perturbations graves, dans la mesure où elle n'affecte qu'un seul émetteur-récepteur de station ou de train.

L'invention est susceptible de nombreuses variantes. On peut interposer un émetteur-récepteur, également synchronisé avec les deux autres, à un emplacement intermédiaire de la cellule. Il n'est pas indispensable que les cellules soient délimitées par les stations.

## Revendications

1. Système cellulaire de transmission radioélectrique d'information entre une infrastructure et des mobiles (10₁,10₂) assujettis à se déplacer suivant un trajet déterminé, l'infrastructure ayant des stations fixes d'émission-réception réparties le long du trajet, **caracterisé en ce que** lesdites stations fixes ont chacune deux émetteurs-récepteurs affectés à deux cellules adjacentes, les émetteurs (E₁, E'₁) de deux stations fixes successives affectées à la même cellule étant synchronisés et émettant avec un codage permettant de tolérer ou d'utiliser les trajets multiples.

2. Système selon la revendication 1, **caractérisé en ce que** les émetteurs utilisent un codage à multiplexage par répartition de fréquence et codage orthogonal (OC FDM).

3. Système selon la revendication 1, **caractérisé en ce que** les émetteurs utilisent le codage à étalement de spectre par séquence directe.

4. Système selon la revendication 1, 2 ou 3, **caractérisé en ce que** chaque mobile a un émetteur-récepteur à l'avant et un autre à l'arrière.

5. Système pour liaison ferroviaire suivant l'une quelconque des revendications 1 à 4, **caractérisé en ce que** chaque cellule est constituée par l'espace compris entre deux stations de base successives munies chacune d'un émetteur-récepteur affecté à cette cellule.

6. Système selon la revendication 5, **caractérisé en ce que** les stations de base sont placées à des stations successives d'accès de passagers.

7. Système selon la revendication 6, **caractérisé en ce qu** les émetteurs-récepteurs sont placés l'un à l'entrée et l'autre à la sortie des véhicules de la station d'accès.

8. Système selon la revendication 6 ou 7, **caractérisé par** des émetteurs-récepteurs intermédiaires disposés à l'intérieur de la cellule et synchronisés avec les émetteurs des stations d'accès.

## Claims

1. A cellular system for transmission of information by radio between an infrastructure and moving bodies (10₁, 10₂) constrained to move along a determined path, the infrastructure having fixed transmitter / receiver stations distributed along the path, **characterized in that** said fixed stations each have two transmitter / receivers associated with two adjacent cells, the transmitters (E₁, E'₁) of two successive fixed stations allocated to the same cell being synchronized, and transmitting using a coding that makes it possible to tolerate or to make use of propagation over multiple paths.

2. A system according to claim 1, **characterized in that** the transmitters use a coding system based on orthogonal code frequency division multiplexing (OCFDM).

3. A system according to claim 1, **characterized in that** the transmitters use direct sequence spread spectrum coding.

4. A system according to claim 1, 2, or 3, **characterized in that** each moving body has a transmitter / receiver at the front and another at the rear.

5. A system for rail links according to any one of claims 1 to 4, **characterized in that** each cell is constituted by the space between two successive base stations each provided with a transmitter / receiver allocated to that cell.

6. A system according to claim 5, **characterized in that** the base stations are located at successive stations for passenger access.

7. A system according to claim 6, **characterized in that** the transmitter / receivers are placed with one at the vehicle entrance to the access station and the other at the vehicle exit therefrom.

8. A system according to claim 6 or 7, **characterized by** intermediate transmitter / receivers placed within a cell and synchronized with the transmitters at the access stations.

## Patentansprüche

1. Zellulares Funkübertragungssystem für Informationen zwischen einer Infrastruktur und mobilen Stationen (10₁, 10₂), die einer Bewegung entlang einer bestimmten Strecke unterworfen sind, wobei die Infrastruktur feste Sende-Empfangsstationen hat, die entlang der Strecke verteilt sind, **dadurch gekennzeichnet, daß** die festen Stationen jeweils zwei Sender-Empfänger haben, die für zwei aneinandergrenzende Zellen vorgesehen sind, wobei die Sender (E₁, E'₁) von zwei aufeinanderfolgenden festen Stationen, die für die gleiche Zelle vorgesehen sind, synchronisiert sind und mit einer Codierung aussenden, die es ermöglicht, die Mehrfach-Wege zuzulassen oder zu benutzen.

2. System nach Anspruch 1, **dadurch gekennzeichnet, daß** die Sender das COFDM(Coded Orthogonal Frequency Division Multiplex)-Multiplexverfahren benutzen.

3. System nach Anspruch 1, **dadurch gekennzeichnet, daß** die Sender eine Direktsequenz-Bandspreizcodierung benutzen.

4. System nach Anspruch 1, 2 oder 3, **dadurch gekennzeichnet, daß** jede mobile Station einen Sender-Empfänger vorne und einen weiteren hinten hat.

5. System für Eisenbahnverbindungen nach einem der Ansprüche 1 bis 4, **dadurch gekennzeichnet, daß** jede Zelle durch den Raum gebildet ist, der zwischen zwei aufeinanderfolgenden Basisstationen liegt, die jeweils mit einem Sender-Empfänger versehen sind, der für diese Zelle vorgesehen ist.

6. System nach Anspruch 5, **dadurch gekennzeichnet, daß** die Basisstationen bei aufeinanderfolgenden Passagier-Zugangsstationen angeordnet sind.

7. System nach Anspruch 6, **dadurch gekennzeichnet, daß** von den Sender-Empfängern einer an der Einfahrt und der andere an der Ausfahrt der Fahrzeuge der Zugangsstation angeordnet sind.

8. System nach Anspruch 6 oder 7, **gekennzeichnet durch** Zwischen-Sender-Empfänger, die innerhalb der Zelle angeordnet und mit den Sendern der Zugangsstation synchronisiert sind.
